# EUROPÄISCHE PATENTANMELDUNG

(11) **EP 1 283 472 A2**
(43) Veröffentlichungstag der Anmeldung: **12.02.2003**
(21) Anmeldenummer: 02017424.9
(22) Anmeldetag: 03.08.2002
(51) Int. Cl.: G06F 11/36

(54) **Programmgesteuerte Einheit**

(30) Priorität: 11.08.2001 DE 10139660
(71) Anmelder: Infineon Technologies AG, 81669 München (DE)
(72) Erfinder: Mayer, Albrecht, Dr., 82041 Deisenhofen (DE); Siebert, Harry, 82178 Puchheim (DE)
(74) Vertreter: Repkow, Ines, Dr. Dipl.-Ing.

(57) **Zusammenfassung**

Es wird eine programmgesteuerte Einheit beschrieben, mit Debug-Ressourcen zur Überwachung der innerhalb der programmgesteuerten Einheit ablaufenden Vorgänge. Die beschriebene programmgesteuerte Einheit zeichnet sich dadurch aus, daß die Debug-Ressourcen eine CPU enthalten, und/oder daß ein Teil der Debug-Ressourcen zur Überwachung der innerhalb des Rests der Debug-Ressourcen ablaufenden Vorgänge vorgesehen ist. Derart aufgebaute Debug-Ressourcen ermöglichen es, in programmgesteuerten Einheiten auftretende Fehler unter allen Umständen schnell und einfach zu lokalisieren und zu beheben.

## Beschreibung

Die vorliegende Erfindung betrifft eine Vorrichtung gemäß dem Oberbegriff der Patentansprüche 1 und 16, d.h. eine programmgesteuerte Einheit, mit Debug-Ressourcen zur Überwachung der innerhalb der programmgesteuerten Einheit ablaufenden Vorgänge.

Programmgesteuerte Einheiten wie Mikroprozessoren, Mikrocontroller, Signalprozessoren etc. sind in unzähligen Ausführungsformen bekannt und bedürfen keiner näheren Erläuterung.

Ein bekanntes Problem von programmgesteuerten Einheiten besteht darin, daß es nicht oder nicht ohne weiteres möglich ist, auftretende Fehler zu lokalisieren und zu beheben.

Aus diesem Grund ist man dazu übergegangen, programmgesteuerte Einheiten mit Debug-Ressourcen auszustatten, durch welche die innerhalb der programmgesteuerten Einheit ablaufenden Vorgänge überwacht werden können. Zu diesen Debug-Ressourcen gehören beispielsweise die bekannten On-Chip-Debug-Support-Module bzw. OCDS-Module.

Solche und andere Debug-Ressourcen ermöglichen es, das Auftreten von von außerhalb der programmgesteuerten Einheit vorgebbaren Zuständen oder Ereignissen innerhalb der programmgesteuerten Einheit zu überwachen und dann, wenn ein solcher Zustand oder ein solches Ereignis aufgetreten ist, von außerhalb der programmgesteuerten Einheit vorgebbare Aktionen durchzuführen oder zu veranlassen.

Die Zustände oder Ereignisse, deren Auftreten durch die Debug-Ressourcen überwachbar sind, können beispielsweise, aber bei weitem nicht ausschließlich umfassen:
- den Zugriff der programmgesteuerten Einheit oder bestimmter Komponenten derselben auf bestimmte Speicheradressen oder Register, und/oder
- den Transfer bestimmter Daten innerhalb der programmgesteuerten Einheit, und/oder
- den Stand des Instruction Pointers.

Die Aktionen, die die Debug-Ressourcen beim Auftreten eines solchen oder anderen Zustandes oder Ereignisses ausführen oder veranlassen, können beispielsweise, aber ebenfalls nicht ausschließlich umfassen:
- eine Meldung des Umstandes, daß die zu überwachende Bedingung eingetreten ist, an eine außerhalb der programmgesteuerten Einheit vorgesehene Einrichtung,
- das Auslesen oder das Verändern des Inhalts bestimmter Speicherelemente oder Register,
- die Ausgabe von Trace-Informationen, d.h. die Ausgabe von innerhalb der programmgesteuerten Einheit transferierten oder verwendeten Adressen, Daten und/oder Steuersignalen, an eine außerhalb der programmgesteuerten Einheit vorgesehenen Einrichtung,
- das Anhalten der Programmausführung,
- die Fortsetzung des Programmausführung im sogenannten Single-Step-Modus, oder
- das Ausführen von zum Debuggen oder Emulieren der programmgesteuerten Einheit dienenden Routinen durch die CPU der programmgesteuerten Einheit.

Das Vorsehen von Debug-Ressourcen bietet somit eine ganze Reihe von Möglichkeiten, in der programmgesteuerten Einheit auftretende Fehler zu lokalisieren und zu beheben.

Die Möglichkeiten, die die Debug-Ressourcen bieten, hängen jedoch von der die Debug-Ressourcen bildenden Logik ab. Beim Entwurf dieser Logik muß daher sorgfältig abgewägt werden, welche Funktionen die Debug-Ressourcen erfüllen können sollten oder müssen, und welche nicht. Sowohl Debug-Ressourcen mit einem zu stark eingeschränkten Funktionsumfang, als auch Debug-Ressourcen mit einem übermäßig großen Funktionsumfang sind nachteilig. Ersteres, weil sich damit nur einfache Fehler finden lassen oder die Fehlersuche mit einem großen Aufwand verbunden ist, und letzteres, weil dadurch die Gefahr zunimmt, daß die Debug-Ressourcen aufgrund von Fehlbedienungen und/oder Hardware-Fehlern selbst nicht ordnungsgemäß arbeiten.

Der vorliegenden Erfindung liegt daher die Aufgabe zugrunde, eine programmgesteuerte Einheit zu schaffen, durch deren Debug-Ressourcen auftretende Fehler unter allen Umständen schnell und einfach lokalisierbar und behebbar sind.

Diese Aufgabe wird erfindungsgemäß durch die in den Patentansprüchen 1 und 16 beanspruchten programmgesteuerten Einheiten gelöst.

Die erfindungsgemäßen programmgesteuerten Einheiten zeichnen sich dadurch aus,
- daß die Debug-Ressourcen eine CPU enthalten, und/oder
- daß ein Teil der Debug-Ressourcen zur Überwachung der innerhalb des Rests der Debug-Ressourcen ablaufenden Vorgänge vorgesehen ist.

Dadurch, daß die Debug-Ressourcen eine CPU enthalten, können diese beliebig komplexe Überwachungen und Aktionen ausführen. Dies ist bei herkömmlichen, d.h. unter Verwendung einer Logik aufgebauten Debug-Ressourcen selbst dann, wenn es sich um eine sehr komplexe Logik handelt, nicht möglich. Dabei sind die unter Verwendung einer CPU aufgebauten Debug-Ressourcen sogar kleiner realisierbar und leichter bedienbar als herkömmliche Debug-Ressourcen mit großem Funktionsumfang.

Dadurch, daß ein Teil der Debug-Ressourcen die innerhalb des Rests der Debug-Ressourcen ablaufenden Vorgänge überwachen kann, können auch innerhalb der Debug-Ressourcen auftretende Fehler lokalisiert und behoben werden. Damit stellt es keinen oder jedenfalls keinen großen Nachteil mehr dar, wenn die Debug-Ressourcen komplexer aufgebaut sind als es bisher der Fall ist.

Die vorgeschlagenen Neuerungen sind unabhängig voneinander einsetzbar und ermöglichen es einzeln und erst recht in Kombination, in programmgesteuerten Einheiten auftretende Fehler unter allen Umständen schnell und einfach zu lokalisieren und zu beheben.

Unabhängig hiervon ist es dadurch möglich, universell einsetzbare Debug-Ressourcen zu entwerfen, die nicht oder nur geringfügig an die programmgesteuerte Einheiten, in welchen sie jeweils eingesetzt werden, angepaßt werden müssen.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: eine erste programmgesteuerte Einheit mit den im folgenden beschriebenen Debug-Ressourcen, und
- Figur 2: eine zweite programmgesteuerte Einheit mit den im folgenden beschriebenen Debug-Ressourcen.

Bei den im folgenden beschriebenen programmgesteuerten Einheiten handelt es sich um einen Mikrocontroller. Es sei jedoch bereits an dieser Stelle darauf hingewiesen, daß sich die nachfolgend beschriebenen Besonderheiten des Mikrocontrollers auch bei beliebigen anderen programmgesteuerten Einheiten wie Mikroprozessoren, Signalprozessoren etc. einsetzen lassen.

Der Vollständigkeit halber sei darauf hingewiesen, daß von den beschriebenen Mikrocontrollern nur die besonders interessierenden Bestandteile derselben gezeigt sind und beschrieben werden.

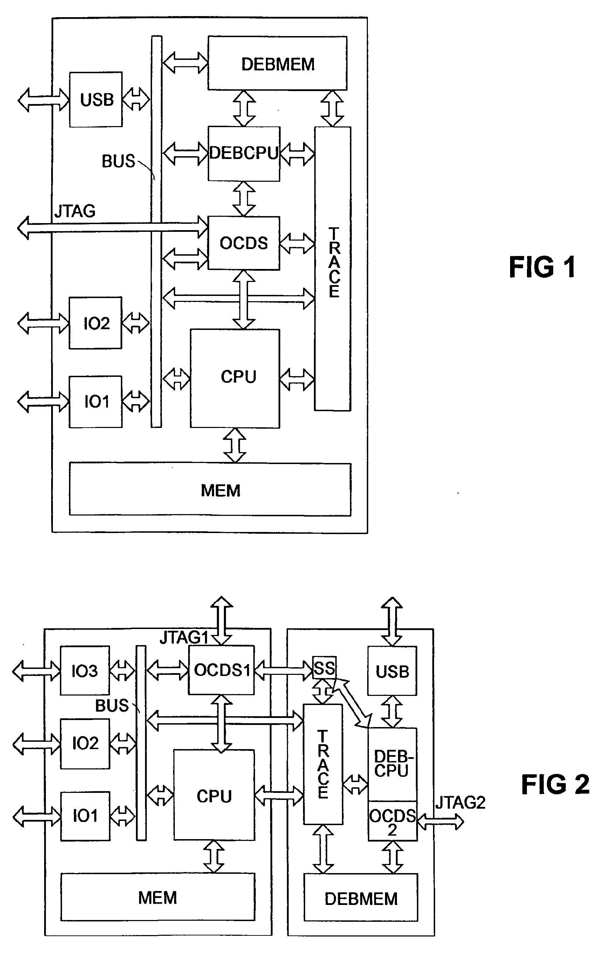

Die in der Figur 1 gezeigte programmgesteuerte Einheit enthält eine erste CPU CPU, eine erste Speichereinrichtung MEM, einen ersten I/O-Controller I01, einen zweiten I/O-Controller IO2, einen USB-Controller USB, und Debug-Ressourcen, wobei die Debug-Ressourcen ein OCDS-Modul OCDS, eine zweite CPU DEBCPU, eine zweite Speichereinrichtung DEBMEM, und eine Datenerfassungseinrichtung TRACE enthält.

Die genannten Komponenten sind über einen Bus BUS und/oder über Einzelverbindungen wie in der Figur 1 gezeigt miteinander verbunden.

Im normalen Betrieb der programmgesteuerten Einheit liest die CPU CPU aus der Speichereinrichtung MEM in dieser gespeicherte Befehle und Operanden aus und führt diese im Zusammenwirken mit den I/O-Controllern IO1, IO2, dem USB-Controller USB und/oder sonstigen in der programmgesteuerten Einheit enthaltenen Peripherieeinheiten aus.

Die Debug-Ressourcen sind im normalen Betrieb der programmgesteuerten Einheit inaktiv, und werden nur während des Debuggens oder Emulierens der programmgesteuerten Einheit verwendet.

Die Debug-Ressourcen werden von einer außerhalb der programmgesteuerten Einheit vorgesehenen Einrichtung, welches beispielsweise ein Computer sein kann, gesteuert. Hierzu ist die externe Einrichtung über ein JTAG-Interface JTAG oder eine sonstige Schnittstelle der programmgesteuerten Einheit mit den Debug-Ressourcen (im betrachteten Beispiel mit dem OCDS-Modul OCDS, eventuell aber auch mit einer oder mehreren anderen oder weiteren Komponenten der Debug-Ressourcen) verbunden. Über das JTAG-Interface geben die Debug-Ressourcen auch bestimmte Daten an die externe Einrichtung aus, welche daraus die in der programmgesteuerten Einheit ablaufenden Vorgänge ermitteln kann.

Das OCDS-Modul OCDS überwacht das Auftreten von ihr von der externen Einrichtung vorgegebenen Bedingungen innerhalb der programmgesteuerten Einheit, und führt bei Auftreten einer oder mehrerer Bedingungen von der externen Einrichtung vorgegebene oder fest eingestellte Aktionen aus.

Dabei können die vorgegebenen Bedingungen, deren Auftreten das OCDS-Modul OCDS überwacht, sämtliche Bedingungen umfassen, die herkömmliche OCDS-Module überwachen können, und können die Aktionen, die das OCDS-Modul OCDS auf das Auftreten einer Bedingung hin ausführt oder veranlaßt, sämtliche Aktionen umfassen, die herkömmliche OCDS-Module in solchen Fällen ausführen können.

Die Zustände oder Ereignisse, deren Auftreten durch das OCDS-Modul OCDS überwachbar sind, können demnach beispielsweise, aber bei weitem nicht ausschließlich umfassen:
- den Zugriff der programmgesteuerten Einheit oder bestimmter Komponenten derselben auf bestimmte Speicheradressen oder Register, und/oder
- den Transfer bestimmter Daten innerhalb der programmgesteuerten Einheit, und/oder
- den Stand des Instruction Pointers.

Die Aktionen, die das OCDS-Modul OCDS beim Auftreten eines solchen oder anderen Zustandes oder Ereignisses ausführt oder veranlaßt, können beispielsweise, aber ebenfalls nicht ausschließlich umfassen:
- eine Meldung des Umstandes, daß die zu überwachende Bedingung eingetreten ist, an die außerhalb der programmgesteuerten Einheit vorgesehene externe Einrichtung,
- das Auslesen oder das Verändern des Inhalts bestimmter Speicherelemente oder Register,
- das Anhalten der Programmausführung durch die CPU CPU,
- die Fortsetzung des Programmausführung im sogenannten Single-Step-Modus, oder
- das Ausführen von zum Debuggen oder Emulieren der programmgesteuerten Einheit dienenden Routinen durch die CPU CPU.

Darüber hinaus kann das OCDS-Modul OCDS auch das Auftreten der genannten oder anderer Bedingungen innerhalb der Debug-Ressourcen, genauer gesagt das Auftreten von innerhalb des Rests der Debug-Ressourcen, im betrachteten Beispiel also innerhalb der CPU DEBCPU, innerhalb der Speichereinrichtung DEBMEM, und/oder innerhalb der Datenerfassungseinrichtung TRACE vorliegenden Zuständen oder Ereignissen überwachen. Hierzu sind herkömmliche OCDS-Module nicht in der Lage.

Der Vollständigkeit halber sei darauf hingewiesen, daß das OCDS-Modul zusätzlich zu den genannten Debug-Ressourcen-Komponenten oder anstelle derselben auch beliebige andere Debug-Ressourcen-Komponenten überwachen könnte. Unabhängig hiervon könnte vorgesehen werden, daß die Überwachung der innerhalb der Debug-Ressourcen ablaufenden Vorgänge auch durch ein eigenes (zweites) OCDS-Modul erfolgen könnte, welches über das erwähnte JTAG-Interface JTAG oder ein eigenes JTAG-Interface oder ein sonstiges Interface mit der erwähnten externen Einrichtung oder einer anderen externen Einrichtung verbunden ist. In diesem Fall könnte das zweite OCDS-Modul sogar auch noch die im ersten OCDS-Modul ablaufenden Vorgänge verfolgen.

Dadurch ist es möglich, daß auch die innerhalb der Debug-Ressourcen ablaufenden Vorgänge verfolgt werden können, also auch die Debug-Ressourcen selbst emuliert und debugged werden können. Damit können auch innerhalb der Debug-Ressourcen auftretende Fehler lokalisiert und behoben werden.

Das OCDS-Modul OCDS steuert darüber hinaus auch die CPU DEBCPU und die Datenerfassungseinrichtung TRACE, und kann auch seinerseits wiederum von der CPU DEBCPU gesteuert werden.

Die Datenerfassungseinrichtung TRACE ist im betrachteten Beispiel ein NEXUS-Modul, und dient zum Erfassen, Komprimieren, und Ausgeben sogenannter Trace-Informationen. Das NEXUS-Modul überwacht das Auftreten von durch das OCDS-Modul OCDS oder die CPU DEBCPU vorgegebenen Bedingungen innerhalb der programmgesteuerten Einheit, und gibt, wenn die Bedingung oder eine der Bedingungen erfüllt ist, ohne eine Unterbrechung des Betriebes der programmgesteuerten Einheit von durch das OCDS-Modul OCDS oder die CPU DEBCPU vorgegebene, innerhalb der programmgesteuerten Einheit verwendete bzw. erzeugte und ohne die Debug-Ressourcen von außerhalb der programmgesteuerten Einheit nicht zugängliche Adressen, Daten und/oder Steuersignale aus. Dadurch ist es beispielsweise, aber bei weitem nicht ausschließlich möglich, daß das NEXUS-Modul jedesmal, wenn die CPU CPU Daten von einer bestimmten Adresse oder einem bestimmten Adreßbereich lesen möchte, die der CPU CPU daraufhin zugeführten Daten ausgibt.

Das NEXUS-Modul basiert auf dem von der IEEE Industry Standards and Technology Organization (IEEE-ISTO) in 1999 definierten, als "The Nexus 5001 Forum Standard for a Global Embedded Processor Debug Interface" bezeichneten Standard. Bezüglich weiterer Einzelheiten zum vorliegend verwendeten NEXUS-Modul wird daher auf diesen Standard verwiesen.

Die Datenerfassungseinrichtung TRACE muß nicht durch ein NEXUS-Modul realisiert sein. Wichtig ist aber, daß die Datenerfassungseinrichtung TRACE nicht jeweils alle Adressen, Daten, und Steuersignale ausgibt, auf welche sie Zugriff hat, sondern nur einen durch die CPU DEBCPU oder das OCDS-Modul OCDS vorgegebenen Teil derselben ausgibt und/oder die vorgegebenen oder alle Adressen, Daten, und Steuersignale nur ausgibt, wenn bestimmte Bedingungen erfüllt sind, beispielsweise wenn und so lange die CPU CPU eine bestimmte Routine ausführt, was beispielsweise an den Adressen feststellbar ist, von welcher die CPU CPU die von ihr ausgeführten Befehle holt.

Dadurch wird die später noch genauer beschriebene CPU DEBCPU entlastet, an welche die Datenerfassungseinrichtung TRACE die von ihr auszugebenden Daten ausgibt. Sofern die CPU DEBCPU entsprechend leistungsfähig ist, könnte auf die Datenerfassungseinrichtung TRACE aber verzichtet werden.

Wie soeben erwähnt, gibt die Datenerfassungseinrichtung TRACE die von ihr auszugebenden Daten an die CPU DEBCPU aus.

Die CPU DEBCPU liest aus der Speichereinrichtung DEBMEM darin gespeicherte Befehle und Operanden aus und führt sie aus. Es erweist sich als vorteilhaft, wenn die in der Speichereinrichtung DEBMEM gespeicherten Daten von der außerhalb der programmgesteuerten Einheit vorgesehenen, mit den Debug-Ressourcen kooperierenden externen Einrichtung in die Speichereinrichtung DEBMEM geschrieben werden können. Die CPU DEBCPU wird durch das OCDS-Modul OCDS gesteuert. Das OCDS-Modul kann durch die Ausgabe entsprechender Steuersignale oder Operanden an die CPU DEBCPU Einfluß auf die von der CPU DEBCPU ausgeführten Operationen nehmen; das OCDS-Modul kann die CPU DEBCPU auch anhalten oder zurücksetzen.

Im betrachteten Beispiel obliegt es der CPU DEBCPU, aus den ihr von der Datenerfassungseinrichung TRACE zugeführten Daten einen bestimmten Teil herauszufiltern, und nur diese Daten aus der programmgesteuerten Einheit an die externe Einrichtung auszugeben, wobei die Ausgabe im betrachteten Beispiel über den USB-Controller USB erfolgt.

Herkömmliche Datenerfassungseinrichtungen (NEXUS-Module) geben die von ihnen erfaßten Daten - gegebenenfalls nach einer Zwischenspeicherung derselben in einer innerhalb der programmgesteuerten Einheit vorgesehenen Speichereinrichtung - gleich aus der programmgesteuerten Einheit aus.

Dadurch, daß vorliegend die Datenerfassungseinrichtung TRACE die von ihr erfaßten Daten an die CPU DEBCPU ausgibt, und die Ausgabe der Trace-Informationen an die externe Einrichtung durch die CPU DEBCPU erfolgt, kann die aus der programmgesteuerten Einheit ausgegebene Datenmenge erheblich reduziert werden.

Eine Reduzierung der Datenmenge ist unter anderem deshalb möglich, weil die CPU DEBCPU in der Lage ist, das Vorliegen von weiteren Bedingungen zu überprüfen, die erfüllt sein müssen, damit Daten ausgegeben werden, und/oder weil die CPU DEBCPU in der Lage ist, den Umfang der auszugebenden Adressen, Daten, und/oder Steuersignale abhängig von der Bedingung, die erfüllt ist, zu variieren.

Dies wäre zwar prinzipiell auch durch die Datenerfassungseinrichtung TRACE möglich, doch würde dies, wenn hierbei auch nur annähernd die Flexibilität erreicht werden soll, die durch die Verwendung der CPU DEBCPU erzielbar ist, eine sehr umfangreiche und kompliziert zu konfigurierende Logik erfordern.

Demgegenüber ist die CPU DEBCPU einfacher realisierbar, und weist die CPU DEBCPU selbst dann, wenn es sich um eine sehr einfache CPU mit beschränktem Funktionsumfang handelt, dennoch eine größere Anzahl von Möglichkeiten auf, die Bedingungen, die für eine Ausgabe von Trace-Informationen erfüllt sein müssen, sowie den Umfang der jeweils auszugebenden Trace-Informationen optimal an die jeweiligen Anforderungen anzupassen.

Darüber hinaus kann auch vorgesehen werden, daß die CPU DEBCPU die Bedingungen überprüft, die in herkömmlichen Debug-Ressourcen durch das OCDS-Modul überprüft werden, und/oder Aktionen ausführt oder veranlaßt, die in herkömmlichen Debug-Ressourcen durch das OCDS-Modul veranlaßt werden. Dadurch würden sich die vom OCDS-Modul wahrzunehmenden Aufgaben auf die Initialisierung und/oder die Steuerung der restlichen Debug-Ressourcen-Komponenten beschränken, wobei selbst diese Aufgaben zumindest teilweise ebenfalls von der CPU DEBCPU ausgeführt werden können.

Die Figur 2 zeigt eine der programmgesteuerten Einheit gemäß Figur 1 entsprechende Anordnung. Im Unterschied zu der in der Figur 1 gezeigten Anordnung besteht die in der Figur 2 gezeigte Anordnung jedoch aus zwei Chips, nämlich einem ersten Chip µC und einem zweiten Chip EC.

Der erste Chip µC ist ein keine oder nur sehr einfache Debug-Ressourcen aufweisender Mikrocontroller, und der zweite Chip EC ist ein Emulations-Chip, der die vorstehend beschriebenen Debug-Ressourcen enthält.

Der erste Chip µC und der zweite Chip EM werden unter Verwendung des Flip-Chip-Verfahrens aufeiandergelötet oder auf sonstige Art und Weise miteinander verbunden, und bilden dann eine der programmgesteuerten Einheit gemäß Figur 1 entsprechende Einheit.

Der erste Chip µC kann aber auch ohne den zweiten Chip EM verwendet werden. Er kann dann mangels entsprechender Debug-Ressourcen zwar nicht so einfach und umfassend debugged oder emuliert werden wie es bei einem auch den zweiten Chip EC enthaltenden Multichip-Modul und der programmgesteuerten Einheit gemäß Figur 1 der Fall ist, ist dafür aber bei ansonsten gleicher Leistungsfähigkeit kleiner und billiger, und mithin besser für den Einsatz in Massenprodukten geeignet.

Der erste Chip µC enthält eine CPU CPU, eine Speichereinrichtung MEM, einen ersten I/O-Controller IO1, einen zweiten I/O-Controller IO2, und ein OCDS-Modul OCDS1.

Die genannten Komponenten sind über einen Bus BUS und/oder über Einzelverbindungen wie in der Figur 2 gezeigt miteinander verbunden.

Die CPU CPU, die Speichereinrichtung MEM, und die I/O-Controller IO1 und IO2 entsprechen den mit diesen Bezugszeichen bezeichneten Komponenten der programmgesteuerten Einheit gemäß Figur 1.

Das OCDS-Modul OCDS1 entspricht einem Teil des OCDS-Moduls OCDS der programmgesteuerten Einheit gemäß Figur 1 und entspricht zusammen mit einem im zweiten Chip EC enthaltenen OCDS-Modul OCDS2 dem OCDS-Modul OCDS der programmgesteuerten Einheit gemäß Figur 1.

Der zweite Chip EC enthält Debug-Ressourcen zum Debuggen oder Emulieren des ersten Chips µC, wobei die Debug-Ressourcen das vorstehend bereits erwähnte OCDS-Modul OCDS2, eine CPU DEBCPU, eine Speichereinrichtung DEBMEM, eine Datenerfassungseinrichtung TRACE, einen USB-Controller USB, und eine Schnittstelle SS enthält.

Die CPU DEBCPU, die Speichereinrichtung DEBMEM, die Datenerfassungseinrichtung TRACE, und der USB-Controller USB entsprechen den mit diesen Bezugszeichen bezeichneten Komponenten der programmgesteuerten Einheit gemäß Figur 1.

Im normalen Betrieb der programmgesteuerten Einheit liest die CPU CPU aus der Speichereinrichtung MEM in dieser gespeicherte Befehle und Operanden aus und führt diese im Zusammenwirken mit den I/O-Controllern IO1, IO2, und/oder sonstigen im ersten Chip µC enthaltenen Peripherieeinheiten aus.

Die Debug-Ressourcen, d.h. das OCDS-Modul OCDS1, und der zweite Chip EC sind im normalen Betrieb der programmgesteuerten Einheit inaktiv, und werden nur während des Debuggens oder Emulierens der programmgesteuerten Einheit verwendet.

Die Debug-Ressourcen werden von einer außerhalb der programmgesteuerten Einheit vorgesehenen Einrichtung, welches beispielsweise ein Computer sein kann, gesteuert. Hierzu kann die externe Einrichtung
- über ein JTAG-Interface JTAG1 oder eine sonstige Schnittstelle des Chips µC mit den Debug-Ressourcen des Chips µC, genauer gesagt mit dem OCDS-Modul OCDS1, und/oder
- über ein JTAG-Interface JTAG2 oder eine sonstige Schnittstelle des Chips EC mit einem Teil der Debug-Ressourcen des Chips EC, genauer gesagt mit dem OCDS-Modul OCDS2
verbunden werden, wobei über die Verbindung zum OCDS-Modul OCDS1 der Chip µC debugged oder emuliert werden kann, und wobei über die Verbindung zum OCDS-Modul OCDS2 die restlichen Debug-Ressourcen-Komponenten, also insbesondere die CPU DEBCPU, aber auch die Speichereinrichtung DEBMEM, die Datenerfassungseinrichtung TRACE, der USB-Controller USB und das OCDS-Modul OCDS1 oder ein Teil derselben debugged oder emuliert werden können.

Über die JTAG-Interfaces JTAG1 und JTAG2 geben die Chips µC und EC auch bestimmte Daten an die externe Einrichtung aus, welche daraus die in der programmgesteuerten Einheit ablaufenden Vorgänge ermitteln kann.

Am Debuggen oder Emulieren des Chips µC sind neben dem OCDS-Modul OCDS1 auch die CPU DEBCPU, die Speichereinrichtung DEBMEM, die Datenerfassungseinrichtung TRACE, und der USB-Controller USB beteiligt; das OCDS-Modul OCDS1 ist mit den genannten Komponenten über die Schnittstelle SS des Chips EC verbunden. Der Aufbau, die Funktion, und die Kooperation der am Debuggen oder Emulieren des Chips µC beteiligten Debug-Ressourcen-Komponenten unterscheiden sich nicht oder jedenfalls nicht wesentlich vom Aufbau, von der Funktion, und von der Kooperation der am Debuggen oder Emulieren der programmgesteuerten Einheit gemäß Figur 1 beteiligten Debug-Ressourcen-Komponenten. Auch die Verbindungen der Debug-Ressourcen-Komponenten untereinander und zu der zu debuggenden oder zu emulierenden Einheit sind gleich. Bezüglich der Einzelheiten zum Aufbau, der Funktion, und der Kooperation der am Debuggen oder Emulieren des Chips µC beteiligten Debug-Ressourcen-Komponenten wird daher auf die Beschreibung der entsprechenden Komponenten der programmgesteuerten Einheit gemäß Figur 1 verwiesen. Unterschiedlich ist nur, daß die zum Debuggen oder Emulieren des Chips µC vorgesehenen Debug-Ressourcen-Komponenten teilweise in einem eigenen Chip (dem Chip EC) untergebracht sind.

Am Debuggen oder Emulieren der Debug-Ressourcen ist nur das OCDS-Modul OCDS2 beteiligt. Dieses entspricht abgesehen von dessen Verwendung, genauer gesagt der Verwendung zum Debuggen oder Emulieren von Debug-Ressourcen, einem herkömmlich OCDS-Modul. Die Debug-Ressourcen, die zum Debuggen oder Emulieren der Debug-Ressourcen vorgesehen sind, durch welche der Chip µC debugged oder emuliert werden kann, können aber auch wie die Debug-Ressourcen zum Debuggen oder Emulieren des Chips µC aufgebaut sein, also insbesondere ebenfalls eine CPU und/oder eine Datenerfassungseinrichtung TRACE enthalten.

Durch die Debug-Ressourcen der beschriebenen programmgesteuerten Einheiten ist es unabhängig von den Einzelheiten der praktischen Realisierung möglich, in programmgesteuerten Einheiten auftretende Fehler unter allen Umständen schnell und einfach zu lokalisieren und zu beheben.

### Bezugszeichenliste

- BUS: BUS
- CPU: CPU
- DEBCPU: CPU
- DEBMEM: Speichereinrichtung
- EC: zweiter Chip (Emulationschip)
- IOx: I/O-Controller
- JTAG: JTAG-Interface
- MEM: Speichereinrichtung
- µC: erster Chip (Mikrocontroller-Standardversion)
- OCDS: OCDS-Modul
- SS: Schnittstelle
- TRACE: Datenerfassungseinrichtung
- USB: USB-Controller

## Patentansprüche

1. Programmgesteuerte Einheit, mit Debug-Ressourcen (OCDS, DEBCPU, DEBMEM, TRACE; OCDS1, OCDS2, DEBCPU, DEBMEM, TRACE, SS) zur Überwachung der innerhalb der programmgesteuerten Einheit ablaufenden Vorgänge,
**dadurch gekennzeichnet,**
**daß** die Debug-Ressourcen eine CPU (DEBCPU) enthalten.

2. Programmgesteuerte Einheit nach Anspruch 1,
**dadurch gekennzeichnet,**
**daß** die von der CPU (DEBCPU) ausgeführten Aktionen durch eine außerhalb der programmgesteuerten Einheit vorgesehene Einrichtung festlegbar sind.

3. Programmgesteuerte Einheit nach Anspruch 2,
**dadurch gekennzeichnet,**
**daß** die Debug-Ressourcen (OCDS, DEBCPU, DEBMEM, TRACE; OCDS1, OCDS2, DEBCPU, DEBMEM, TRACE, SS) eine Speichereinrichtung (DEBMEM) zur Speicherung der von der CPU (DEBCPU) auszuführenden Befehle aufweist, und daß die Speichereinrichtung durch die außerhalb der programmgesteuerten Einheit vorgesehene Einrichtung oder auf Veranlassung derselben beschreibbar ist.

4. Programmgesteuerte Einheit nach Anspruch 2,
**dadurch gekennzeichnet,**
**daß** der Ablauf des von der CPU (DEBCPU) auszuführenden Programmes durch die außerhalb der programmgesteuerten Einheit vorgesehene Einrichtung oder auf Veranlassung derselben beeinflußbar ist.

5. Programmgesteuerte Einheit nach einem der vorhergehenden Ansprüche,
**dadurch gekennzeichnet,**
**daß** durch die von der CPU (DEBCPU) ausgeführten Befehle überprüft wird, ob innerhalb der programmgesteuerten Einheit bestimmte Zustände oder Ereignisse auftreten.

6. Programmgesteuerte Einheit nach einem der vorhergehenden Ansprüche,
**dadurch gekennzeichnet,**
**daß** durch die von der CPU (DEBCPU) ausgeführten Befehle beim Auftreten bestimmter Zustände oder Ereignisse innerhalb der programmgesteuerten Einheit bestimmte Aktionen veranlaßt werden.

7. Programmgesteuerte Einheit nach Anspruch 6,
**dadurch gekennzeichnet,**
**daß** die bestimmten Aktionen in der Ausgabe bestimmter Daten an die außerhalb der programmgesteuerten Einheit vorgesehene Einrichtung bestehen.

8. Programmgesteuerte Einheit nach Anspruch 6 oder 7,
**dadurch gekennzeichnet,**
**daß** die bestimmten Aktionen in der Ausgabe bestimmter Trace-Informationen an die außerhalb der programmgesteuerten Einheit vorgesehene Einrichtung bestehen.

9. Programmgesteuerte Einheit nach Anspruch 8,
**dadurch gekennzeichnet,**
**daß** der CPU (DEBCPU) ein Teil der Trace-Informationen, die aus der programmgesteuerten Einheit ausgegeben werden können, zugeführt wird, und daß die CPU entscheidet, ob und gegebenenfalls welche der ihr zugeführten Trace-Informationen aus der programmgesteuerten Einheit ausgegeben werden.

10. Programmgesteuerte Einheit nach Anspruch 9,
**dadurch gekennzeichnet,**
**daß** die der CPU (DEBCPU) zugeführten Trace-Informationen von einer Datenerfassungseinrichtung (TRACE) stammen, welche aus den Trace-Informationen, die aus der programmgesteuerten Einheit ausgegeben werden könnten, einen bestimmten Teil auswählt und der CPU zuführt.

11. Programmgesteuerte Einheit nach Anspruch 10,
**dadurch gekennzeichnet,**
**daß** die Datenerfassungseinrichtung (TRACE) ein NEXUS-Modul ist.

12. Programmgesteuerte Einheit nach einem der vorhergehenden Ansprüche,
**dadurch gekennzeichnet,**
**daß** die CPU (DEBCPU) zumindest einen Teil des Rests der Debug-Ressourcen (OCDS, DEBCPU, DEBMEM, TRACE; OCDS1, OCDS2, DEBCPU, DEBMEM, TRACE, SS) steuert.

13. Programmgesteuerte Einheit nach einem der vorhergehenden Ansprüche,
**dadurch gekennzeichnet,**
**daß** ein Teil der Debug-Ressourcen (OCDS, DEBCPU, DEBMEM, TRACE; OCDS1, OCDS2, DEBCPU, DEBMEM, TRACE, SS) zur Überwachung der innerhalb des Rests der Debug-Ressourcen ablaufenden Vorgänge vorgesehen ist.

14. Programmgesteuerte Einheit nach Anspruch 13,
**dadurch gekennzeichnet,**
**daß** der zur Überwachung der innerhalb der Debug-Ressourcen (OCDS, DEBCPU, DEBMEM, TRACE; OCDS1, OCDS2, DEBCPU, DEBMEM, TRACE, SS) ablaufenden Vorgänge vorgesehene Teil derselben das Auftreten bestimmter Bedingungen innerhalb der Debug-Ressourcen überwacht und beim Auftreten einer oder mehrerer dieser Bedingungen bestimmte Aktionen ausführt.

15. Programmgesteuerte Einheit nach Anspruch 13 oder 14,
**dadurch gekennzeichnet,**
**daß** der zur Überwachung der innerhalb der Debug-Ressourcen (OCDS, DEBCPU, DEBMEM, TRACE; OCDS1, OCDS2, DEBCPU, DEBMEM, TRACE, SS) ablaufenden Vorgänge vorgesehene Teil derselben ein OCDS-Modul (OCDS; OCDS1) ist.

16. Programmgesteuerte Einheit, mit Debug-Ressourcen (OCDS, DEBCPU, DEBMEM, TRACE; OCDS1, OCDS2, DEBCPU, DEBMEM, TRACE, SS) zur Überwachung der innerhalb der programmgesteuerten Einheit ablaufenden Vorgänge,
**dadurch gekennzeichnet,**
**daß** ein Teil der Debug-Ressourcen zur Überwachung der innerhalb des Rests der Debug-Ressourcen ablaufenden Vorgänge vorgesehen ist.

17. Programmgesteuerte Einheit nach Anspruch 16,
**dadurch gekennzeichnet,**
**daß** der zur Überwachung der innerhalb der Debug-Ressourcen (OCDS, DEBCPU, DEBMEM, TRACE; OCDS1, OCDS2, DEBCPU, DEBMEM, TRACE, SS) ablaufenden Vorgänge vorgesehene Teil derselben das Auftreten bestimmter Bedingungen innerhalb der Debug-Ressourcen überwacht und beim Auftreten einer oder mehrerer dieser Bedingungen bestimmte Aktionen ausführt.

18. Programmgesteuerte Einheit nach Anspruch 16 oder 17,
**dadurch gekennzeichnet,**
**daß** der zur Überwachung der innerhalb der Debug-Ressourcen (OCDS, DEBCPU, DEBMEM, TRACE; OCDS1, OCDS2, DEBCPU, DEBMEM, TRACE, SS) ablaufenden Vorgänge vorgesehene Teil derselben ein OCDS-Modul (OCDS; OCDS1) ist.

19. Programmgesteuerte Einheit nach einem der Ansprüche 16 bis 18,
**dadurch gekennzeichnet,**
**daß** die Debug-Ressourcen (OCDS, DEBCPU, DEBMEM, TRACE; OCDS1, OCDS2, DEBCPU, DEBMEM, TRACE, SS) eine CPU (DEBCPU) enthalten.

20. Programmgesteuerte Einheit nach Anspruch 19,
**dadurch gekennzeichnet,**
**daß** die von der CPU (DEBCPU) ausgeführten Aktionen durch eine außerhalb der programmgesteuerten Einheit vorgesehene Einrichtung festlegbar sind.

21. Programmgesteuerte Einheit nach Anspruch 20,
**dadurch gekennzeichnet,**
**daß** die Debug-Ressourcen (OCDS, DEBCPU, DEBMEM, TRACE; OCDS1, OCDS2, DEBCPU, DEBMEM, TRACE, SS) eine Speichereinrichtung (DEBMEM) zur Speicherung der von der CPU (DEBCPU) auszuführenden Befehle aufweist, und daß die Speichereinrichtung durch die außerhalb der programmgesteuerten Einheit vorgesehene Einrichtung oder auf Veranlassung derselben beschreibbar ist.

22. Programmgesteuerte Einheit nach Anspruch 20,
**dadurch gekennzeichnet,**
**daß** der Ablauf des von der CPU (DEBCPU) auszuführenden Programmes durch die außerhalb der programmgesteuerten Einheit vorgesehene Einrichtung oder auf Veranlassung derselben beeinflußbar ist.

23. Programmgesteuerte Einheit nach einem Ansprüche 19 bis 22,
**dadurch gekennzeichnet,**
**daß** durch die von der CPU (DEBCPU) ausgeführten Befehle überprüft wird, ob innerhalb der programmgesteuerten Einheit bestimmte Zustände oder Ereignisse auftreten.

24. Programmgesteuerte Einheit nach einem der Ansprüche 19 bis 23,
**dadurch gekennzeichnet,**
**daß** durch die von der CPU (DEBCPU) ausgeführten Befehle beim Auftreten bestimmter Zustände oder Ereignisse innerhalb der programmgesteuerten Einheit bestimmte Aktionen veranlaßt werden.

25. Programmgesteuerte Einheit nach Anspruch 24,
**dadurch gekennzeichnet,**
**daß** die bestimmten Aktionen in der Ausgabe bestimmter Daten an die außerhalb der programmgesteuerten Einheit vorgesehene Einrichtung bestehen.

26. Programmgesteuerte Einheit nach Anspruch 24 oder 25,
**dadurch gekennzeichnet,**
**daß** die bestimmten Aktionen in der Ausgabe bestimmter Trace-Informationen an die außerhalb der programmgesteuerten Einheit vorgesehene Einrichtung bestehen.

27. Programmgesteuerte Einheit nach Anspruch 26,
**dadurch gekennzeichnet,**
**daß** der CPU (DEBCPU) ein Teil der Trace-Informationen, die aus der programmgesteuerten Einheit ausgegeben werden können, zugeführt wird, und daß die CPU entscheidet, ob und gegebenenfalls welche der ihr zugeführten Trace-Informationen aus der programmgesteuerten Einheit ausgegeben werden.

28. Programmgesteuerte Einheit nach Anspruch 27,
**dadurch gekennzeichnet,**
**daß** die der CPU (DEBCPU) zugeführten Trace-Informationen von einer Datenerfassungseinrichtung (TRACE) stammen, welche aus den Trace-Informationen, die aus der programmgesteuerten Einheit ausgegeben werden könnten, einen bestimmten Teil auswählt und der CPU zuführt.

29. Programmgesteuerte Einheit nach Anspruch 28,
**dadurch gekennzeichnet,**
**daß** die Datenerfassungseinrichtung (TRACE) ein NEXUS-Modul ist.

30. Programmgesteuerte Einheit nach einem der Ansprüche 19 bis 29,
**dadurch gekennzeichnet,**
**daß** die CPU (DEBCPU) zumindest einen Teil des Rests der Debug-Ressourcen steuert.
